# FASCICULE DE BREVET EUROPEEN

(11) **EP 2 334 444 B1**
(45) Date de publication et mention de la délivrance du brevet: **20.02.2019**
(21) Numéro de dépôt: 09760164.5
(22) Date de dépôt: 16.10.2009
(51) Int. Cl.: B05D 5/08, A47J 36/02, C09D 183/04

(54) **ARTICLE CULINAIRE COMPORTANT UN REVÊTEMENT ANTIADHÉSIF PRÉSENTANT DES PROPRIÉTÉS AMÉLIORÉES D'ADHÉRENCE AU SUPPORT**
KOCHARTIKEL MIT NICHT KLEBRIGEM ÜBERZUG MIT VERBESSERTEN SUBSTRATHAFTUNGSEIGENSCHAFTEN
COOKING ITEM COMPRISING A NON-STICK COATING WITH IMPROVED PROPERTIES OF ADHESION TO THE SUBSTRATE

(30) Priorité: 16.10.2008 FR 0857049
(43) Date de publication de la demande: 22.06.2011
(73) Titulaire: SEB S.A., 69130 Ecully (FR)
(72) Inventeur: LE BRIS, Stéphanie, F-73190 Challes Les Eaux (FR); DUBANCHET, Aurélien, F-73100 Gresy Sur Aix (FR); PERILLON, Jean-Luc, F-26130 Saint Paul Trois Chateaux (FR)
(74) Mandataire: Rivière, Sophie
(86) Numéro de dépôt international: PCT/FR2009/051979
(87) Numéro de publication internationale: WO 2010/043826

(56) Documents cités:
- US-A- 5 037 675
- US-A1- 2003 138 661

## Description

La présente invention concerne de manière générale des articles culinaires comportant un revêtement antiadhésif, et plus particulièrement des articles culinaires comportant un revêtement antiadhésif de type vitreux présentant des propriétés améliorées d'adhérence au support. La présente invention concerne également un procédé de fabrication d'un tel article culinaire.

Par revêtement du type vitreux, on entend au sens de la présente invention un revêtement qui a l'apparence du verre ou d'un émail, qui peut être soit organo-minéral, soit entièrement minéral.

Par revêtement vitreux organo-minéral, on entend au sens de la présente invention, un revêtement constitué d'un matériau de type sol-gel (c'est-à-dire obtenu par voie sol-gel) dont le réseau est essentiellement inorganique, mais qui comporte des groupements organiques, notamment en raison des précurseurs utilisés et de la température de cuisson du revêtement.

Par revêtement entièrement minéral, on entend, au sens de la présente invention, un revêtement constitué d'un matériau entièrement inorganique, exempt de tout groupement organique. Un tel revêtement peut également être obtenu par voie sol-gel avec une température de cuisson d'au moins 400°C, ou à partir de précurseurs de type tétraéthoxy-silane (TEOS) avec une température de cuisson qui peut être inférieure à 400°C.

Dans le domaine revêtements antiadhésifs de type vitreux destinés à des ustensiles culinaires, on connaît les revêtements sol-gel, et notamment ceux obtenus à partir d'alcoxydes métalliques à base de silice (silanes) ou à base d'alumine (aluminates).

Ces revêtements ont actuellement un développement important dans le domaine des articles culinaires, car ils permettent d'obtenir des revêtements colorés qui résistent particulièrement bien à la rayure et à la température.

Ainsi, par exemple, la demande de brevet américain US 2003/0138661 décrit un article culinaire revêtu d'un revêtement protecteur en polymère inorganique, notamment en matériau sol-gel. Ce revêtement protecteur est déposé directement sur le support métallique.

Cependant, de tels revêtements ont une adhérence limitée sur des supports métalliques, notamment des supports en aluminium, en acier inoxydable ou en fonte.

Pour remédier à ces problèmes, il est connu de l'homme du métier de préparer la surface de support par un traitement chimique (par exemple du type décapage chimique) ou mécanique (par exemple par brossage ou sablage), ou encore une combinaison de ces traitements.

Toutefois, même lorsque de tels traitements sont mis en oeuvre, l'adhérence au support du revêtement antiadhésif reste limitée, en particulier lorsque le revêtement antiadhésif est soumis à une déformation mécanique telle qu'un choc ou un perçage, par exemple pour fixer un rivet ou un goujon d'assemblage.

Ainsi, lorsque des articles culinaires dont le fond présente une face intérieure revêtue d'un revêtement antiadhésif de type sol-gel sont soumis à des chocs violents, on observe un marquage sous l'impact, qui s'accompagne de fissures se propageant radialement, et ce, même si la face intérieure du fond a été préalablement sablée ou brossée.

Il s'ensuit que des précautions importantes doivent être prises lors de la fabrication de tels articles culinaires, ce qui se traduit par des taux de rebuts élevés et des cadences de production faibles.

Pour remédier à ces problèmes d'adhérence limitée au support rencontrés dans les revêtements vitreux de type sol-gel, la demanderesse a découvert de manière surprenante que le renforcement de la face intérieure du fond de l'article culinaire par une base dure discontinue en un matériau métallique ou céramique permet d'améliorer significativement l'adhérence du revêtement antiadhésif sur des supports métalliques (en particulier en acier inoxydable, en aluminium ou en alliage d'aluminium), qui se manifeste notamment par une tenue à l'impact améliorée du revêtement antiadhésif.

L'utilisation d'une base dure discontinue sous un revêtement antiadhésif est connue de l'homme du métier lorsqu'il s'agit d'un revêtement antiadhésif de type fluorocarboné, mais non lorsqu'il s'agit d'un matériau vitreux. Ainsi, le brevet américain US 5,037,675 décrit un article culinaire comprenant un support en aluminium sur la surface intérieure duquel est déposée une première couche discontinue d'émail obtenue à partir d'une fritte borosilicatée, puis deux couches successives d'un revêtement à base de résine fluorocarbonée.

Par matériau métallique, on entend, au sens de la présente invention un matériau consistant en un élément métallique (par exemple l'aluminium ou le fer), généralement bon conducteur électrique et thermique et donneur d'électeurs, ou dans un alliage métallique, c'est-à-dire un matériau résultant du mélange d'un métal de base (métal prédominant et éléments d'alliage), par exemple un acier inoxydable ou un alliage d'aluminium.

Par matériau céramique, on entend, au sens de la présente invention, tout matériau inorganique, essentiellement non métallique.

Par matériau essentiellement non métallique, on entend, au sens de la présente invention, que le matériau présente un réseau inorganique, dans lequel peuvent se trouver en très faible quantité des éléments métalliques tels que l'aluminium. Les matériaux inorganiques non métalliques du type verre ou émail ne sont pas considérés, au sens de la présente invention, comme des matériaux céramiques pouvant constituer la base dure si ces matériaux présentent un point de ramollissement inférieur au point de fusion du support.

Par exemple, dans le cas d'un support en aluminium ou en alliage d'aluminium présentant une température de fusion de l'ordre de 600°C, l'émail utilisable dans le cadre de la présente invention présente un point de ramollissement d'au moins 600°C.

Par tenue à l'impact, on entend, au sens de la présente invention, l'aptitude du revêtement à résister à un choc violent.

Par opposition, un revêtement ayant une faible tenue à l'impact, présente après un choc violent (ou un impact) un marquage sous l'impact, qui s'accompagne de fissures se propageant radialement. L'adhérence dans cette zone devient si faible qu'un simple grattage de l'ongle permet d'enlever une partie du revêtement dont la taille est en fait bien supérieure à celle de l'impact lui-même.

En particulier, la présente invention a pour objet un article culinaire comprenant un support métallique présentant une face intérieure concave destinée à être disposée du côté des aliments susceptibles et une face extérieure convexe destinée à être disposée vers la source de chaleur, ladite face intérieure étant revêtue successivement à partir du support d'une base dure et d'un revêtement antiadhésif recouvrant ladite base dure, caractérisé en ce que :
▪ la base dure est une couche discontinue en matériau céramique ou métallique, qui se présente sous forme d'une dispersion superficielle de gouttes solides dudit matériau, qui sont réparties de manière homogène sur la face intérieure dudit article, avec un taux de recouvrement de la face intérieure compris entre 20% et 90%, et
▪ ledit revêtement antiadhésif est un revêtement de type vitreux se présentant sous forme d'un film continu ayant une épaisseur d'au moins 10 µm et constitué d'un matériau sol-gel comprenant une matrice d'au moins un polyalcoxylate métallique et au moins 5% en poids par rapport au poids total du revêtement d'au moins un oxyde métallique dispersé dans ladite matrice.

Par dispersion superficielle de gouttes solides de matériau céramique ou métallique, on entend au sens de la présente invention, une couche dudit matériau, discontinue et se présentant à l'état divisé sur un support (en l'occurrence celui de l'article culinaire), la rugosité de cette couche étant créée par les gouttes solides de matériau.

Par taux de recouvrement du support, on entend au sens de la présente invention, le rapport, exprimé en pourcentage, de la surface du support effectivement couverte par la dispersion superficielle de gouttes de matériau (céramique ou métallique) sur la surface totale du support pouvant être couverte par la base dure.

A titre de matériaux métalliques pouvant être utilisés dans le cadre de la présente invention pour constituer la base dure discontinue, on conseille les aciers, de préférence inoxydables, l'aluminium ou les alliages d'aluminium, le zinc, le fer ou le cuivre.

A titre de matériaux céramiques pouvant être utilisés dans le cadre de la présente invention pour constituer la base dure discontinue, on conseille l'alumine (éventuellement additionnée d'une faible quantité d'oxyde de titane), la zircone, les émaux et les verres présentant un point de ramollissement égal ou supérieur à la température de fusion du support.

On observe que la présence d'une telle base dure discontinue disposée entre le support et le revêtement antiadhésif de type sol-gel conduit à une amélioration significative de la tenue à l'impact du revêtement antiadhésif.

Selon un mode de réalisation particulièrement avantageux de la présente invention, la face intérieure du support est préalablement sablée ou brossée avant le dépôt de la base dure 3.

En ce qui concerne maintenant le revêtement recouvrant la face intérieure structurée, et en particulier le matériau sol-gel constitutif de ce revêtement, la matrice de ce matériau peut avantageusement comprendre les produits de condensation de polyalcoxylates métalliques, par exemple un ou des polyalcoxysilanes, un aluminate, un titanate, un zirconate, un vanadate, un borate ou leurs mélanges.

D'une manière préférée, la matrice du revêtement selon l'invention comprend un polyalcoxysilane et/ou un aluminate de manière à constituer une matrice mixte.

Dans une variante de l'invention, la matrice du revêtement selon l'invention est greffée par un ou plusieurs groupements organiques choisis parmi les groupements alkyles en C₁-C₄ et les groupements phényle. Ces groupements sont nécessaires pour améliorer l'hydrophobicité du revêtement. Afin d'obtenir une meilleure stabilité thermique du revêtement, les chaînes courtes sont privilégiées dans le cadre de la présente invention.

De manière préférée, la matrice du revêtement selon l'invention est greffée par un ou plusieurs groupements méthyle, qui améliorent le caractère hydrophobe du revêtement sans gêner la formation du réseau inorganique.

Outre la matrice d'au moins un polyalcoxylate métallique, le revêtement vitreux selon l'invention comprend au moins 5% en poids, et de préférence de 5 à 30% en poids par rapport au poids total du revêtement d'au moins un oxyde métallique, qui est de préférence finement dispersé dans la matrice. Cet oxyde métallique se présente généralement sous forme colloïdale sous forme d'agrégats, dont la taille est inférieure à un micron, voire à 300 nmou 400 nm.

A titre d'oxyde métallique colloïdal utilisable dans le revêtement antiadhésif selon l'invention, on peut notamment citer la silice, l'alumine, l'oxyde de cérium, l'oxyde de zinc, l'oxyde de vanadium et l'oxyde de zirconium. Les oxydes métalliques colloïdaux préférés sont la silice et l'alumine.

La présence d'un oxyde métallique dans la matrice du revêtement selon l'invention permet d'obtenir un film d'une épaisseur suffisante, à savoir une épaisseur d'au moins 10 µm. Si l'épaisseur du revêtement est inférieure à 10 µm, la résistance mécanique du film formé est insuffisante.

De préférence, le film a une épaisseur comprise entre 10 et 80 µm, et mieux entre 30 et 50 µm de sorte que la pellicule ainsi formée est continue, cohérente et suffisante pour absorber la rugosité du support.

De manière avantageuse, le matériau sol-gel constitutif du revêtement antiadhésif peut en outre comprendre au moins une huile de silicone pour améliorer le caractère hydrophobe de la surface du revêtement, et notamment après une agression thermique du type passage à la flamme.

En effet, le polyalcoxylate métallique présente des groupements hydrophobes qui sont détruits à haute température lors d'un passage à la flamme. Mais cette disparition du caractère hydrophobe est momentanée, car elle est progressivement compensée par l'huile de silicone piégée dans le polyalcoxylate et dont la migration en surface en quantités infinitésimales favorise la reconstitution progressive des groupements hydrophobes à la surface du film.

On observe qu'avec un revêtement selon l'invention comprenant au moins 0,1% en poids d'huile de silicone, la reconstitution du caractère hydrophobe est suffisante au moment d'une nouvelle cuisson. En effet, la valeur de l'angle de contact statique Θ d'une goutte d'eau déposée sur le revêtement de l'invention est de l'ordre de 20° après une agression thermique du type passage à la flamme. Cette valeur d'angle de contact statique remonte à au moins 75° après un processus de reconstitution des propriétés hydrophobes consistant en un réchauffage de la température ambiante à 200°C, sur une période d'au moins 5 minutes, c'est-à-dire lorsque l'ustensile est prêt pour une nouvelle cuisson.

De préférence, l'huile de silicone représente 0,1 à 6% en poids et mieux 0,3 à 5% en poids du poids total du revêtement (état sec). Au-dessous de 0,1% en poids d'huile de silicone, la reconstitution des groupements hydrophobes ayant disparu lors d'un passage à la flamme (600°C) est moindre, l'angle obtenu étant inférieur à 62°.

De manière davantage préférée, le matériau sol-gel du revêtement selon l'invention comprend 0.5 à 2% en poids d'huile de silicone par rapport au poids total du revêtement sec. Dans ce cas, l'angle de contact statique Θ initial d'une goutte d'eau déposée sur un tel revêtement est de 95°. Ce revêtement après une agression thermique du type passage à la flamme présente un angle de 20°. Après un processus de reconstitution comprenant au moins une étape de réchauffage de la température ambiante à 200°C sur une période d'au moins 5 minutes, l'angle de contact statique devient supérieur à 75° lorsque l'ustensile est prêt pour une nouvelle cuisson.

Le revêtement selon l'invention peut comprendre une huile silicone ou un mélange d'huiles silicones.

A titre d'huiles silicones utilisables dans le revêtement selon l'invention, on peut notamment citer les phényl silicones, les méthyl-phényl silicones et les méthyl silicones.

Si le revêtement selon l'invention est utilisé pour être en contact avec des aliments, on choisira de préférence une huile silicone de grade alimentaire, et en particulier une huile choisie parmi les méthyl-phényl silicones et les méthyl silicones de grade alimentaire.

A titre d'huiles méthyl-phényl silicones, on peut notamment citer les huiles non alimentaires commercialisées par la société WACKER sous la dénomination commerciale WACKER SILICONOL AP150 et par la société DOW CORNING sous la dénomination commerciale DOW CORNING 550 fluid, ainsi que les huiles alimentaires commercialisées par la société WACKER AR00. A titre d'huiles méthyl silicones, on peut notamment citer l'huile commercialisée par la société RHODIA sous la dénomination commerciale RHODIA 47 V 350, l'huile de la société WACKER 200 fluid, ou encore l'huile de la société TEGO ZV 9207, qui sont des huiles méthylsilicones de grade alimentaire.

De préférence, on utilisera une huile de silicone choisie parmi celles mentionnées ci-dessus, avec un poids moléculaire d'au moins 1000 g/mol, qui est non réactive et présente une viscosité comprise entre 20 et 2000 mPa.s.

De manière avantageuse, le matériau sol-gel du revêtement selon l'invention peut en outre comprendre des charges pour améliorer les propriétés mécaniques du revêtement formé, et/ou des pigments, pour conférer de la couleur au revêtement. En outre, la présence de charges et/ou de pigments a également un effet bénéfique sur la dureté du film.

A titre de charges utilisables dans le revêtement selon l'invention, on peut notamment citer l'alumine, la zircone, le mica, les argiles (comme la montmorillonite, la sépiolite, la gypsite, la kaolinite et la laponite®) et le phosphate de zirconium.

A titre de pigments utilisables dans le revêtement selon l'invention, on peut notamment citer le dioxyde de titane, les oxydes mixtes de cuivre-chrome-manganèse, les oxydes de fer, le noir de carbone, le rouge de pyralène, les aluminosilicates, les paillettes métalliques et notamment les paillettes d'aluminium.

De préférence, les charges et/ou les pigments sont sous forme de paillettes, ce qui présente l'avantage d'améliorer la dureté du revêtement antiadhésif.

De préférence, le pigment et/ou les charges sont de taille nanométrique, afin d'améliorer leur dispersion et leur répartition dans le revêtement, conférant à celui-ci une grande régularité de performance.

Dans une version avantageuse de l'article culinaire selon l'invention, le support est une calotte creuse d'un article culinaire, présentant un fond et une paroi latérale s'élevant à partir dudit fond.

Le support de l'article culinaire selon l'invention est avantageusement réalisé en un matériau choisi parmi les métaux, le verre, et les céramiques.

On conseille les supports métalliques, et de préférence les supports en aluminium ou en alliage d'aluminium, anodisé ou non, en acier inoxydable, en fonte, en fer, ou en cuivre. On conseille également les supports composites multicouches, par exemple les supports bicouches aluminium (ou alliage d'aluminium) /acier inoxydable et les supports tricouches acier inoxydable /aluminium (ou alliage d'aluminium) /acier inoxydable

A titre d'alliages d'aluminium susceptibles d'être utilisés pour réaliser le support de l'article culinaire selon l'invention, on conseille les alliages d'aluminium faiblement alliés, et en particulier :
- les aluminiums « purs » à 99% d'aluminium de la série 1000, et par exemple les alliages 1050, 1100, 1200 et 1350,
- les alliages d'aluminium et de manganèse de la série 3000, et par exemple les alliages 3003, 3004, 3105 et 3005,
- les alliages d'aluminium et de silicium de la série 4000, - les alliages d'aluminium et de magnésium de la série 5000, et par exemple les alliages 5005, 5050 et 5052, et
- les alliages d'aluminium, silicium et magnésium de la série 6000, et par exemple les alliages 6053, 6060, 6063, 6101 et 6951, et
- les alliages d'aluminium, fer, silicium de la série 8000, et par exemple l'alliage 8128.

Enfin, la présente invention concerne également un procédé de fabrication d'un article culinaire, caractérisé en ce qu'il comprend les étapes suivantes :
a) une étape de fourniture d'un support présentant la forme finale de l'article culinaire avec une face intérieure concave destinée à être disposée du côté des aliments susceptibles d'être introduits dans ledit article, et une face extérieure convexe destinée à être disposée du côté d'une source de chaleur;
b) de manière optionnelle, une étape de traitement de la face intérieure du support, pour obtenir une face intérieure traitée adaptée à l'adhérence d'une base dure sur le support;
c) une étape de réalisation d'une base dure adhérente sur ladite face intérieure du support, préalablement traitée ou non ;
d) une étape de réalisation d'un revêtement antiadhésif sur ladite base dure formée à l'étape c) ;
ledit procédé étant caractérisé en ce que l'étape c) de réalisation de la base dure comprend la projection thermique sur la face intérieure du support, préalablement traitée ou non, d'un matériau apte à être projeté par un procédé de projection thermique, de manière à former sur la face intérieure du support une dispersion superficielle de gouttes dudit matériau qui adhèrent au support, et
en ce que l'étape d) de réalisation du revêtement antiadhésif sur ladite base dure comprend les étapes successives suivantes :
▪ d1) la préparation d'une composition sol-gel (A + B) comprenant au moins un oxyde métallique colloïdal et au moins un précurseur de type oxyde métallique,
▪ d2) l'application sur tout ou partie de ladite base dure d'au moins une couche de la composition sol-gel (A+B) ayant une épaisseur d'au moins 20 µm à l'état humide, puis
▪ d3) la cuisson de ladite couche de composition sol-gel (A+B) pour obtenir un revêtement vitreux antiadhésif d'au moins 10 µm d'épaisseur.

Par projection thermique, on entend, au sens de la présente invention, la projection en fines particules, sur une surface, qui est de préférence préalablement préparée, d'un produit solide pulvérulent, fondu ou ramolli, au moyen d'une source de chaleur.

A titre de matériaux aptes à être projetés par un procédé de projection thermique et utilisables dans cadre de la présente invention, on conseille les matériaux céramiques et les matériaux métalliques.

Dans le cas d'une base dure métallique, le matériau métallique peut être projeté sous forme de gouttelettes en fusion, qui proviennent avantageusement d'un fil métallique chauffé à la flamme ou par un arc électrique (procédé dit « arcspray »).

La base dure métallique peut également être obtenue par projection thermique d'un matériau métallique sous forme d'une poudre métallique chauffée à la flamme ou par projection thermique d'un matériau métallique sous forme d'un jet de plasma.

Dans le cas d'une base dure céramique, le matériau céramique peut être projeté sous forme d'une poudre chauffée à la flamme ou avec une torche plasma. Dans ce cas, il est non seulement possible de projeter des céramiques qui sont conductrices de l'électricité, mais également des céramiques qui ne sont pas conductrices de l'électricité. Si l'on souhaite projeter des céramiques à l'aide d'un procédé à l'arc électrique de type « arcspray », il faut que celles-ci soient conductrices d'électricité, et dans le cas contraire (céramiques nonconductrices de l'électricité) il faut qu'elles soient entourées d'une gaine conductrice d'électricité.

Le procédé selon l'invention présente l'avantage de ne pas nécessiter de traitement thermique après la projection du matériau destiné à constituer la base dure, comme ce serait le cas pour une base dure en émail obtenue par cuisson d'une barbotine d'émail.

En ce qui concerne la réalisation du revêtement antiadhésif de type sol-gel, la composition sol-gel A+B est préparée comme suit :
c1) préparation d'une composition aqueuse A comprenant 5 à 30% en poids par rapport au poids total de la composition aqueuse A d'au moins un oxyde métallique, et 0 à 20% en poids par rapport au poids de la composition A d'un solvant comprenant au moins un alcool ;
c2) préparation d'une solution B comprenant au moins un précurseur de type alcoxyde métallique ;
c3) mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique colloïdal représente 5 à 30% poids de la composition sol-gel (A+B) à l'état sec.

En ce qui concerne plus particulièrement la préparation de la composition aqueuse A, il est nécessaire d'incorporer au moins 5% en poids d'au moins un oxyde métallique par rapport en poids total de la composition A pour former un film ayant après cuisson une épaisseur d'au moins 10 microns. Si par contre on a plus de 30% en poids par rapport au poids de la composition A, celle-ci n'est plus stable.

L'oxyde métallique de la composition aqueuse A est tel que défini ci-dessus. Il s'agit de préférence d'un oxyde métallique colloïdal choisi parmi la silice colloïdale et/ou l'alumine colloïdale.

La présence d'un solvant à base d'alcool est optionnelle, mais présente l'avantage d'améliorer la compatibilité de la composition aqueuse A avec la solution B d'alcoxyde métallique.

Il est toutefois possible de travailler sans solvant, mais dans ce cas, le choix des polyalcoxylates est réduit à ceux présentant une excellente compatibilité avec l'eau. Une quantité excessive de solvant (supérieure à 20%), est possible, mais génère inutilement des composés organiques volatiles, ce qui n'est pas favorable pour l'environnement.

On utilise de préférence à titre de solvant dans la composition aqueuse A de l'invention un solvant alcoolique oxygéné ou un éther-alcool.

La composition aqueuse A selon l'invention peut également comprendre, outre l'oxyde métallique colloïdal et, le cas échéant, le solvant à base d'alcool, au moins une huile de silicone, qui est de préférence présente dans la composition A à raison de 0,05% à 3% en poids par rapport au poids total de la composition.

Avec une composition aqueuse A comprenant 0.5 à 2% en poids d'huile de silicone, on obtient un revêtement présentant des propriétés hydrophobes reconstituables dans le cadre d'un processus d'utilisation culinaire. L'huile de silicone de la composition A est une huile silicone de grade alimentaire définie ci-dessus.

La composition aqueuse A de l'invention peut également comprendre des charges et/ou des pigments, qui sont tels que définis ci-dessus.

La composition aqueuse A de l'invention peut en outre comprendre de la silice pyrogénée, qui a pour fonction de régler la viscosité de la composition sol-gel et/ou la brillance du revêtement sec.

En ce qui concerne la préparation de la solution B, on utilise de préférence à titre de précurseur un alcoxyde métallique choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   R₁, R₂, R₃ ou R₃' désignant un groupement alkyle,
   R₂' désignant un groupement alkyle ou phényle,
   n étant un nombre entier correspondant à la valence maximale des métaux M₁, M₂ ou M₃,
   M₁ M₂ ou M₃ désignant un métal choisi parmi Si, Zr, Ti, Sn, Al, Ce, V, Nb, Hf, Mg ou Ln,

Avantageusement, l'alcoxyde métallique de la solution B est un alcoxysilane.

A titre d'alcoxysilanes utilisables dans la solution B du procédé de l'invention, on peut notamment citer le méthyltriméthoxysilane (MTMS), le tétraéthoxysilane (TEOS), le méthyltriéthoxysilane (MTES), le diméthyldiméthoxysilane, et leurs mélanges.

De manière préférée, on utilisera les alcoxysilanes MTES et TEOS, car ils présentent l'avantage de ne pas contenir de groupements méthoxy. En effet l'hydrolyse des methoxy conduit à la formation de methanol dans la formulation sol-gel, ce qui compte tenu de son classement toxique nécessite des précautions supplémentaires lors de l'application. A contrario l'hydrolyse des groupements ethoxy ne génère que de l'ethanol possédant un classement plus favorable et donc des prescriptions d'utilisations moins contraignantes pour le revêtement solgel.

Selon un mode de réalisation avantageux du procédé de l'invention la solution B peut comprendre un mélange d'un alcoxylane tel que défini ci-dessus et un alcoxyde d'aluminium.

Le précurseur de type alcoxyde métallique de la solution B est mélangé avec un acide organique, minéral, de Lewis qui représente 0,01 à 10% en poids du poids total de la solution B.

A titre d'acides utilisables pour mélanger avec le précurseur d'alcoxyde métallique, on peut notamment citer l'acide acétique, l'acide citrique, l'acéto-acétate d'éthyle l'acide chlohydrique ou l'acide formique.

Les acides préférés selon l'invention sont des acides organiques, et plus particulièrement l'acide acétique et l'acide formique.

Après la préparation de la composition aqueuse A et celle de la solution B de précurseur, on les mélange ensemble, pour former une composition sol-gel (A+B). Les quantités respectives de chacune des compositions A et B doivent être ajustées de manière que la quantité de silice colloïdale dans la composition sol-gel représente 5 à 30% en poids sur le sec.

La composition sol-gel (A + B) de l'invention peut être appliquée sur le support par pulvérisation ou par tout autre mode d'application, tel qu'au trempé, au tampon, au pinceau, au rouleau, par spin-coating ou par sérigraphie. Cependant, dans le cadre d'un objet en forme, la pulvérisation par exemple au moyen d'un pistolet, présente l'avantage de former un film homogène et continu, qui, après cuisson, forme un revêtement continu, d'épaisseur régulière et étanche.

Après application de la composition sol-gel (A+B) selon l'invention, on procède généralement à un séchage, de préférence à 60°C pendant 1 minute.

La nature du revêtement antiadhésif évolue en fonction de la température de cuisson, d'un revêtement, organo-minéral pour une température de cuisson de l'ordre de 200°C vers un revêtement essentiellement minéral pour des températures de cuisson plus élevées.

Pour une température de cuisson inférieure à 400°C, notamment entre 180 et 350°C, le revêtement antiadhésif est un revêtement organo-minéral (sauf si le précurseur est un TEOS uniquement : dans ce cas on aurait un revêtement essentiellement minéral, et ce, même à des températures de cuisson inférieures à 400°C).

A titre de support utilisable pour réaliser l'article culinaire selon l'invention, on utilisera avantageusement une calotte creuse telle que décrite précédemment, présentant un fond et une paroi latérale s'élevant à partir du fond.

Le support utilisable dans le cadre de la présente invention pourra avantageusement être réalisé un matériau choisi parmi les métaux, le verre, et les céramiques.

A titre de supports métalliques utilisables dans le procédé selon l'invention, on peut avantageusement citer les supports en aluminium ou en alliage d'aluminium, anodisé ou non, en acier inoxydable, en fonte, en fer, ou encore en cuivre. On peut également citer les supports composites multicouches, par exemple les supports bicouches aluminium (ou alliage d'aluminium) /acier inoxydable et les supports tri-couches acier inoxydable /aluminium (ou alliage d'aluminium) /acier inoxydable.

Le procédé selon l'invention peut en outre comprendre une étape de dépôt d'une couche d'émail sur la face opposée à celle revêtue d'un revêtement antiadhésif selon l'invention, cette étape de dépôt de la couche d'émail étant réalisée préalablement à celle du revêtement antiadhésif selon l'invention.

Outre les avantages mentionnés ci-dessus, le procédé conforme à l'invention est particulièrement simple de mise en oeuvre et peut facilement être envisagé sans bouleversement des processus de fabrication classique des articles culinaires.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'art antérieur selon une deuxième variante de réalisation (support sablé),
- la figure 2 représente une vue schématique en coupe d'un article culinaire conforme à l'invention selon une deuxième variante de réalisation (support sablé),

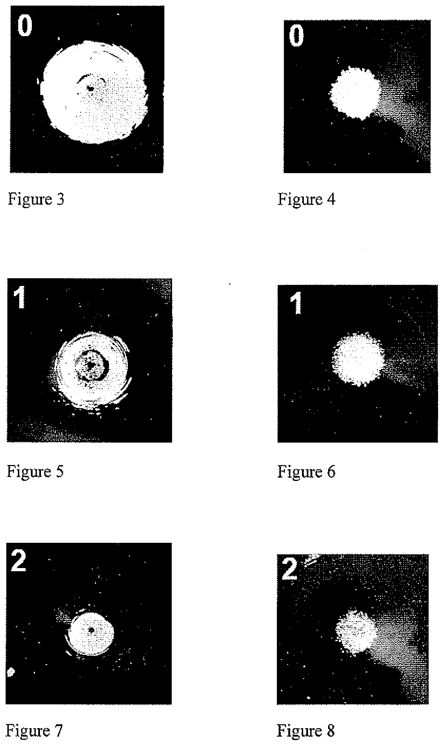

- les figures 3 à 13 représentent une succession de vues de dessus d'un support métallique revêtu d'un revêtement antiadhésif après des tests de tenue à l'impact du revêtement antiadhésif selon le test d'Erichsen conformément à la norme ISO 6272, ces vues servant à constituer une échelle visuelle d'évaluation de tenue à l'impact : les figures 3, 5, 7, 9, 11 et 13 sont des vues du support obtenues lorsque le choc est réalisé sur la face intérieure avec le revêtement antiadhésif (test d'embouti intérieur), tandis que les figures 4, 6, 8, 10, et 12 sont des vues du support lorsque le choc est réalisé sur la face opposée à celle munie du revêtement antiadhésif (test d'embouti extérieur),

- la figure 14 représente une vue de dessus de l'article culinaire de la figure 1 à l'issue du test d'Erichsen, et
- la figure 15 représente une vue de dessus de l'article culinaire de la figure 2 à l'issue du test d'Erichsen.

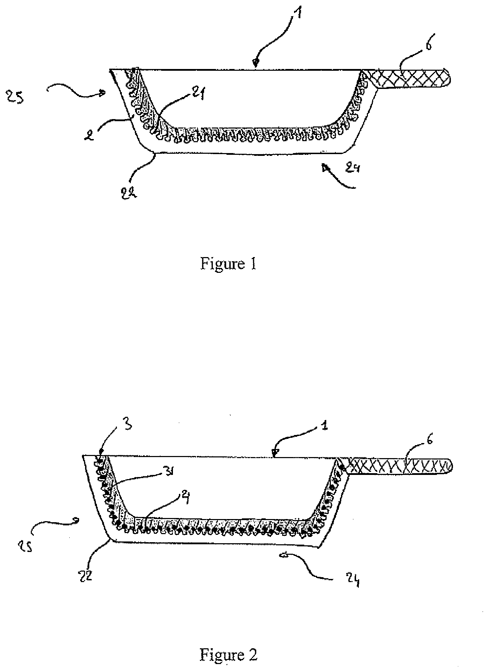

Les éléments identiques représentés sur les figures 1 et 2 sont identifiés par des références numériques identiques. Sur ces figures, on a représenté, à titre d'exemple d'article culinaire selon l'art antérieur, une poêle 1 comprenant un support 2 se présentant sous forme de calotte creuse avec un fond 24 et une paroi latérale 25 s'élevant à partir du fond 34, et une poignée de préhension 6. Le support 2 comprend une face intérieure 21 pouvant recevoir des aliments, et une face extérieure 22 destinée à être disposée du côté de la source de chaleur, telle qu'une plaque de cuisson ou un brûleur.

La figure 1 montre un article culinaire conforme à l'art antérieur dont la face intérieure 21 a été dégraissée puis sablée. Cette face intérieure 21 sablée est également revêtue d'un revêtement antiadhésif vitreux 4 de type sol gel conforme à la présente invention.

La figure 2 montre un exemple de réalisation d'un article culinaire conforme à l'invention, dans lequel la face intérieure 21, qui a été préalablement dégraissée et sablée, est revêtue successivement à partir du support 2, d'une base dure 3 en acier inoxydable et d'un revêtement antiadhésif 4 vitreux.

La base dure 3 est une couche en acier inoxydable, qui est discontinue et comprend une dispersion superficielle de gouttes d'acier 31, qui sont réparties de manière homogène à la surface de la face intérieure 21, avec un taux de revêtement de la face intérieure entre 20 et 90%. Les gouttes d'acier 31, qui sont dispersées à la surface de la face intérieure 21, sont noyées dans la couche de revêtement antiadhésif 4, de manière à permettre l'accrochage du revêtement antiadhésif 4 à la base dure 3. Une telle base dure 3 sous forme de dispersion superficielle de gouttes d'acier permet d'améliorer significativement l'adhérence du revêtement antiadhésif 4 sur le support 2, et en particulier la tenue à l'impact.

On donne ci-après un mode de réalisation préférentiel d'un article culinaire 1 conforme à l'invention, qui comprend les étapes successives suivantes :
a) fourniture d'un support 2, présentant la forme finale de l'article culinaire avec une face intérieure 21 destinée à être disposée du côté des aliments susceptibles d'être introduits dans ledit article 1, et une face extérieure 22 destinée à être disposée du côté d'une source de chaleur ;
b) une étape de préparation de la surface de la face intérieure 21 comprenant le dégraissage de ladite surface puis un traitement mécanique tel que le sablage ou le brossage ;
c) réalisation d'une base dure 3 en acier inoxydable sur ladite face intérieure 21 dudit support 2 par projection thermique de l'acier sous forme de gouttelettes en fusion, ces gouttelettes provenant d'un fil d'acier inoxydable chauffé par un arc électrique ; puis
d) réalisation d'un revêtement antiadhésif 4 sur la couche dure 3 formée à l'étape c) par voie sol-gel conformément au procédé de l'invention.

### EXEMPLES

### Produits

### Acier inoxydable

### Revêtement sol-gel (A+B) :

### Composition aqueuse A

Oxyde métallique colloïdal : silice colloïdale sous forme de solution aqueuse à 30% de silice, commercialisée par la société Clariant sous la dénomination commerciale Klebosol.

### Solvant : isopropanol

Huile de silicone : huile méthyl silicone de grade alimentaire commercialisée par la société TEGO sous la dénomination commerciale « TEGO ZV 9207 ».

Pigment : pigment noir minéral commercialisé par la société Ferro sous la dénomination commerciale « FA 1260 »

### Solution B

### Précurseurs :

- méthyltriéthoxysilane (MTES) répondant à la formule Si(OCH₂CH₃)₃CH₃,
- méthyltriéthoxysilane (MTMS) répondant à la formule Si(OCH₃)₃CH₃,

### Acide :acide acétique

### Test

### Tenue à l'impact du revêtement antiadhésif évaluée au moyen du test d'Erichsen conformément à la norme ISO 6272.

Il s'agit d'un test d'essai au choc par chute d'une bille de 2 kg dont la hauteur de chute est de 50 cm . On utilise pour les essais des plaquettes en aluminium, dont l'une des faces est revêtues d'un revêtement antiadhésif de type sol-gel conforme à la présente invention. Les plaquettes sont toutes identiques entre elles (en terme d'épaisseur et de nature de l'alliage) afin d'avoir une déformation constante pour tous les essais.

Ce test comprend la réalisation d'un choc directement sur le revêtement antiadhésif déposée sur la face revêtue d'une plaquette (test d'embouti intérieur) et un choc sur la face opposée à celle revêtue du revêtement antiadhésif d'une autre plaquette (test d'embouti extérieur).

Après la réalisation des chocs, on procède à un examen visuel de la face revêtue du revêtement antiadhésif.

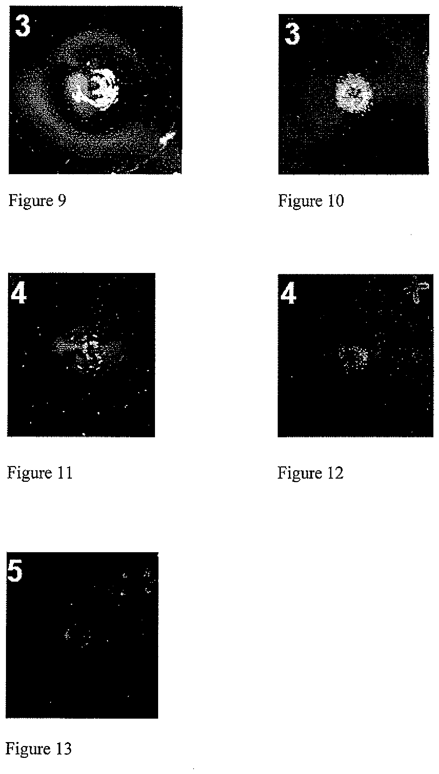

La tenue à l'impact du revêtement antiadhésif est estimée selon l'échelle visuelle suivante, qui est établie d'une part après un choc directement sur le revêtement antiadhésif (test d'embouti intérieur), et d'autre part sur la face opposée à celle revêtue du revêtement antiadhésif (test d'embouti extérieur) :
- on attribue **la notation 0** si l'on observe :
   ▪ pour le test d'embouti intérieur :
      au niveau de l'impact, une complète délamination du revêtement antiadhésif sur toute la surface déformée de la face intérieure qui se manifeste par l'apparition d'une zone « blanche » au niveau de l'impact (correspondant à une portion de surface métallique sans revêtement), se présentant sous forme d'un disque ayant un diamètre de l'ordre de 25 mm, comme illustré sur la figure 3 ;
   ▪ pour le test d'embouti extérieur :
      également une complète délamination du revêtement antiadhésif sur une large surface de la face intérieure déformée, qui se manifeste par l'apparition d'une zone « blanche » au niveau de l'impact (correspondant à une portion de surface métallique sans revêtement), cette zone se présentant sous forme d'un disque ayant un diamètre d'au moins 10 mm, comme illustré sur la figure 4 ;
- on attribue **la notation 1** si l'on observe :
   ▪ pour le test d'embouti intérieur :
      au niveau de l'impact, une délamination quasi complète du revêtement antiadhésif sur une large surface de la face intérieure déformée, cette délamination se manifestant par l'apparition d'une zone presque « blanche » au niveau de l'impact (correspondant à une portion de surface métallique sans revêtement), cette zone se présentant sous forme d'un disque ayant un diamètre de l'ordre de 20 mm comme illustré sur la figure 5 ;
   ▪ pour le test d'embouti extérieur :
      une délamination quasi-complète du revêtement antiadhésif sur une surface moyenne de la face intérieure déformée, qui se manifeste par l'apparition d'une zone « blanche » sans revêtement au niveau de l'impact, se présentant sous forme d'un disque ayant un diamètre de l'ordre de 10 mm, comme illustré sur la figure 6 ;
- on attribue **la notation 2** si l'on observe :
   ▪ pour le test d'embouti intérieur :
      au niveau de l'impact, une délamination quasi complète du revêtement antiadhésif sur une surface moyenne de la face intérieure revêtue, qui se manifeste par l'apparition d'une zone « blanche » sans revêtement au niveau de l'impact, se présentant sous forme d'un disque ayant un diamètre de l'ordre de 10 mm, comme illustré sur la figure 7 ;
   ▪ pour le test d'embouti extérieur :
      au niveau de l'impact une zone blanche sous forme d'un disque de diamètre inférieur à 10 mm, dans lequel sont localisés des éclats larges allant jusqu'à la surface métallique du support, avec une densité relativement élevée d'éclats, comme illustré sur la figure 8 ;
- on attribue **la notation 3** si l'on observe :
   ▪ pour le test d'embouti intérieur :
      au niveau de l'impact, une zone centrale dans laquelle sont localisés des éclats larges laissant apparaître le métal, comme illustré sur la figure 9 ;
   ▪ pour le test d'embouti extérieur :
      au niveau de l'impact, une surface blanche sous forme de disque dont le diamètre est inférieur à 10 mm, et dans lequel sont localisés des éclats fins allant jusqu'au métal avec une densité moyennement élevé, comme illustré sur la figure 10 ;
- on attribue **la notation 4** si l'on observe :
   ▪ pour le test d'embouti intérieur :
      au niveau de l'impact, une zone sous forme d'un disque de petit diamètre, dans laquelle sont localisés des éclats fins allant jusqu'au métal avec une densité assez faible, comme illustré sur la figure 11 ;
   ▪ pour le test d'embouti extérieur quelques piqures allant jusqu'au métal, qui sont localisées au niveau de l'impact, comme illustré sur la figure 12 ;
- enfin, on attribue **la notation 5** si l'on observe :
   ▪ pour le test d'embouti intérieur :
      au niveau de l'impact, un léger halo un peu plus clair que le revêtement antiadhésif, comme illustré sur la figure 13 ;
   ▪ pour le test d'embouti extérieur :
      pas de modifications de l'aspect du revêtement antiadhésif (non illustré dans l'échelle visuelle utilisée dans la présente demande).

### EXEMPLE 1

### Réalisation d'une composition de revêtement antiadhésif R conforme à celui de la présente invention.

Pour la réalisation d'une composition de revêtement antiadhésif R conforme à l'invention, on procède comme suit :
1.1) on prépare une composition aqueuse A à base de silice colloïdale, conformément au procédé de l'invention ;
1.2) et 1.3) on prépare une solution B à base de MTES, conformément au procédé de l'invention ;
1.4) et 1.5) on réalise, à partir de la composition aqueuse A et de la solution B, une composition sol-gel (A+B), conformément au procédé de l'invention.

### 1.1 préparation d'une composition aqueuse A à base de silice colloïdale.

On a réalisé une composition aqueuse A à base de silice colloïdale, qui est présentée dans le tableau 1 :

**Tableau 1**

| ***Constituants de la partie A*** | ***Quantité (g)*** |
|---|---|
| solution aqueuse à 30% de silice colloïdale : Klebosol | 42 |
| Eau | 16 |
| Isopropanol | 8 |
| Pigment noir FA 1220 | 33 |
| Huile silicone TEGO ZV 9207 | 1 |
| **TOTAL** | **100** |

### 1.2 : préparation d'une solution B selon l'invention à base de MTES.

On réalise une solution B en mélangeant 59,4 g de MTES à 2.4 g d'acide acétique, donnant une solution à 4% en poids d'acide dans le MTES.

### 1.3 : préparation d'une solution selon l'invention à base de MTMS.

On réalise une solution B en mélangeant 59,4 g de MTMS à 0,6 g d'acide acétique, donnant une solution à 1% en poids d'acide dans le MTMS.

### 1.4 : préparation d'un premier exemple composition sol-gel SG selon l'invention (à partir de MTES)

On réalise une première composition sol-gel SG selon l'invention en ajoutant, à 100 g de composition aqueuse A selon l'invention, 61.8 g de la solution B de l'exemple 1.2. On mélange, dans un mélangeur planétaire pendant une heure en conservant une température inférieure à 60°C, à l'issue de laquelle on obtient une composition sol-gel selon l'invention SG qui est conservée à température ambiante. La composition SG est laissée à maturer pendant 24 heures à température ambiante après mélange, avant application sur un support.

### 1.5 : préparation d'un deuxième exemple de composition sol-gel SG selon l'invention (à partir de MTMS)

On réalise une deuxième composition sol-gel SG selon l'invention en ajoutant, à 100 g de composition aqueuse A selon l'invention, 60 g de solution B de l'exemple 1.3. On mélange, dans un mélangeur planétaire pendant une heure en conservant une température inférieure à 60°C, à l'issue de laquelle on obtient une composition sol-gel selon l'invention SG qui est conservée à température ambiante. La composition SG est laissée à maturer pendant 24 heures à température ambiante après mélange, avant application sur un support.

### EXEMPLE 2

### Réalisation d'un premier exemple d'article culinaire selon l'invention : support sablé + base dure discontinue en acier inoxydable.

On utilise à titre de support une calotte en aluminium obtenue par formage d'un disque en aluminium (de type 1200), la calotte ainsi formée ayant un fond dont le diamètre est d'environ 26 cm.

Cette calotte est dégraissée par aspersion d'une solution alcaline, et la face intérieure du fond de la calotte est sablée (par du corindon).

Puis, on projette de l'acier inoxydable sous forme de gouttelettes en fusion qui proviennent d'un fil en acier inoxydable chauffé par un arc électrique, selon le procédé dit « procédé Arc spray ».

Puis, on réalise le revêtement antiadhésif R en appliquant sur la base dure 3, la composition sol-gel SG de l'exemple 1.4 (à base de MTES), selon le cycle suivant :
- application sur le support d'une première couche de composition sol-gel SG de l'exemple 1.4, avec une épaisseur humide de 30 à 70,
- séchage pendant 1 minute à 60°C, et
- refroidissement à la température ambiante.

On applique ce cycle deux fois.

Puis, on cuit pendant 17 minutes à 270°C l'article ainsi revêtu.

On obtient alors un article culinaire avec un revêtement antiadhésif présentant une épaisseur sèche comprise de l'ordre de 35 microns (± 5 µm), et qui est lisse, noir et brillant.

L'article culinaire selon l'invention de l'exemple 2 est représenté sur la figure 2.

### EXEMPLE 3

### Réalisation d'un premier exemple d'article culinaire témoin : support sablé sans base dure.

On utilise comme support 2 le même que celui de l'exemple 2 (support sablé).

Dans cet exemple, on ne réalise pas de base dure discontinue sur la face intérieure 21 du support 2. Par conséquent, le revêtement antiadhésif 4 est réalisé directement sur la face intérieure 21 du support, préalablement dégraissée puis sablée, en procédant de la même manière qu'à l'exemple 2 (revêtement sol gel de l'exemple 1.4 à base de MTES).

L'article culinaire de l'exemple 3 est représenté sur la figure 1.

### EXEMPLE 4

### Réalisation d'un deuxième exemple d'article culinaire selon l'invention : support sablé + base dure discontinue en acier inoxydable.

Dans cet exemple, on procède de la même manière qu'à l'exemple 2, sauf que l'on utilise comme revêtement sol gel celui de l'exemple 1.5 (à base de MTMS).

### EXEMPLE 5

### Réalisation d'un deuxième exemple d'article culinaire témoin : support sablé sans base dure.

Dans cet exemple, on procède de la même manière qu'à l'exemple 3, sauf que l'on utilise comme revêtement sol gel celui de l'exemple 1.5 (à base de MTMS).

### EXEMPLE 6 : Test d'Erichsen.

On évalue la tenue à l'impact selon le test d'Erichsen des articles culinaires témoin des exemples 3 et 5 (à partir de MTES, représentés sur la figure 1) et des articles culinaires selon l'invention des exemples 2 et 4 (à partir de MTMS, représentés sur la figure 2).

Les résultats des tests d'Erichsen obtenus d'une part avec les poêles selon l'invention des exemples 2 et 4 (figure 2) et d'autre part avec les poêles témoin des exemples 3 et 5 (figure 1) sont des observations visuelles traduites en une note comprise entre 0 et 5 selon l'échelle visuelle précédemment indiquée et illustrée par les figures 3 à 13, qui sont toutes à la même échelle. Ces résultats sont présentés dans le tableau 2 ci-après.

**Tableau 2**

| | Résultats du test d'Erichsen : notation selon l'échelle visuelle (1-5) | |
|---|---|---|
| | Test d'embouti intérieur | Test d'embouti extérieur |
| Article culinaire selon l'invention (exemple 2, figure 2) | 5 | 4 |
| Article culinaire témoin (exemple 3, figure 1) | 2 | 2 |
| Article culinaire selon l'invention (exemple 4, figure 2) | 5 | 4 |
| Article culinaire témoin (exemple 5, figure 1) | 2 | 2 |

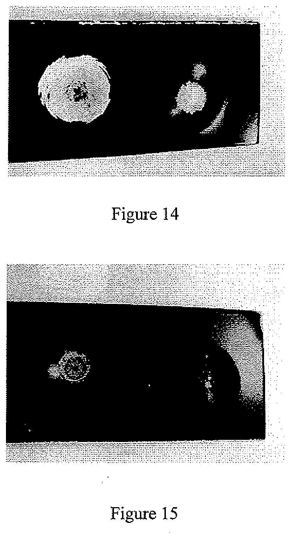

La figure 14 représente (sur la même figure) l'état du revêtement antiadhésif d'une part après un test d'embouti intérieur (partie gauche de la figure 14), et d'autre part après un test d'embouti extérieur (partie droite de la figure 14) d'un support métallique sablé comprenant un revêtement antiadhésif 4 sans base dure 3. La figure 14 correspond bien aux figures 7 et 8 de l'échelle visuelle (notation 2).

La figure 15 représente (sur la même figure) l'état du revêtement antiadhésif d'une part après un test d'embouti intérieur (partie gauche de la figure 15), et d'autre part après un test d'embouti extérieur (partie droite de la figure 15) d'un support métallique sablé recouvert successivement d'une base dure 3 et d'un revêtement antiadhésif 4, conformément à la présente invention. La figure 15 correspond bien aux figures 13 et 12.

Les résultats présentés dans le tableau 2 et illustrés sur les figures 14 et 15 montrent que la formation d'une base dure métallique sur la surface de la face intérieure permet d'améliorer les propriétés d'adhérence au support d'un revêtement antiadhésif de type sol-gel.

## Revendications

1. Article culinaire (1) comprenant un support métallique (2) présentant une face intérieure (21) concave destinée à être disposée du côté des aliments susceptibles d'être introduits dans ledit article et une face extérieure (22) convexe destinée à être disposée vers la source de chaleur, ladite face intérieure (21) étant revêtue successivement à partir du support (2) d'une base dure (3) et d'un revêtement antiadhésif (4) recouvrant ladite base dure (3),
**caractérisé en ce que** :
▪ la base dure (3) est une couche discontinue en matériau céramique ou métallique, qui se présente sous forme d'une dispersion superficielle de gouttes dudit matériau réparties de manière homogène sur la face intérieure (21) dudit article (1), avec un taux de recouvrement de la face intérieure (21) compris entre 20% et 90%, et
▪ ledit revêtement antiadhésif (4) est un revêtement de type vitreux se présentant sous forme d'un film continu ayant une épaisseur d'au moins 10 µm et constitué d'un matériau sol-gel comprenant une matrice d'au moins un polyalcoxylate métallique et au moins 5% en poids par rapport au poids total du revêtement d'au moins un oxyde métallique dispersé dans ladite matrice.

2. Article culinaire (1) selon la revendication 1, **caractérisé en ce que** la base dure (3) est une couche discontinue d'acier inoxydable.

3. Article culinaire (1) selon la revendication 1, **caractérisé en ce que** la base dure (3) est une couche discontinue d'alumine ou de zircone.

4. Article culinaire (1) selon l'une quelconque des revendications 1 à 3, **caractérisé en ce que** la face intérieure (21) du support (2) est sablée ou brossée.

5. Article culinaire (1) selon l'une quelconque des revendications précédentes, **caractérisé en ce que** la base dure (3) discontinue est réalisée en un matériau céramique ou métallique qui présente une dureté égale ou supérieure à celle du métal ou de l'alliage métallique constitutif du support (2).

6. Article culinaire (1) selon l'une quelconque des revendications précédentes, **caractérisé en ce que** le polyalcoxylate métallique est un polyalcoxysilane.

7. Article culinaire (1) selon l'une quelconque des revendications 1 à 5, **caractérisé en ce que** le polyalcoxylate métallique est un aluminate.

8. Article culinaire (1) selon l'une quelconque des revendications 1 à 5, **caractérisé en ce que** le matériau sol-gel comprend une matrice mixte de polyalcoxysilane et d'aluminate.

9. Article culinaire (1) selon l'une quelconque des revendications précédentes, **caractérisé en ce que** l'oxyde métallique est choisi dans le groupe constitué de la silice, l'alumine, l'oxyde de cérium, l'oxyde de zinc, l'oxyde de vanadium et l'oxyde de zirconium.

10. Article (1) selon l'une quelconque des revendications précédentes, **caractérisé en ce que** le matériau sol-gel constitutif dudit revêtement antiadhésif (2) comprend en outre au moins une huile de silicone, qui est de préférence choisie parmi les méthyl-phényl silicones et les méthyl silicones.

11. Procédé de fabrication d'un article culinaire (1), **caractérisé en ce qu'**il comprend les étapes suivantes :
a) une étape de fourniture d'un support (2) présentant la forme finale de l'article culinaire avec une face intérieure (21) concave destinée à être disposée du côté des aliments susceptibles d'être introduits dans ledit article (1), et une face extérieure (22) convexe destinée à être disposée du côté d'une source de chaleur;
b) de manière optionnelle, une étape de traitement de la face intérieure (21) du support (3) pour obtenir une face intérieure (21) traitée adaptée à l'adhérence d'une base dure (3) sur le support (2) ; ladite étape b) de traitement étant de préférence une étape de traitement mécanique de type sablage.
c) une étape de réalisation d'une base dure (3) adhérente sur ladite face intérieure (21) du support (2), préalablement traitée ou non ;
d) une étape de réalisation d'un revêtement antiadhésif (4) sur ladite base dure (3) formée à l'étape c) ;
ledit procédé étant **caractérisé en ce que** l'étape c) de réalisation de la base dure (3) comprend la projection thermique sur la face intérieure (21) du support (2), traitée ou non, d'un matériau apte à être projeté par un procédé de projection thermique, de manière à former sur ladite face intérieure (21) du support (2) une dispersion superficielle de gouttes dudit matériau qui adhérent au support (2), et
**en ce que** l'étape d) de réalisation du revêtement antiadhésif (4) sur ladite base dure (3) comprend les étapes successives suivantes :
▪ d1) la préparation d'une composition sol-gel (A + B) comprenant au moins un oxyde métallique colloïdal et au moins un précurseur de type oxyde métallique ;
▪ d2) application sur tout ou partie de ladite couche base dure (3) d'au moins une couche de la composition sol-gel (A+B) ayant une épaisseur d'au moins 20 µm à l'état humide ; puis
▪ d3) cuisson de ladite couche de composition sol-gel (A+B) pour obtenir un revêtement vitreux antiadhésif (4) d'au moins 10 µm d'épaisseur.

12. Procédé selon la revendication 11, **caractérisé en ce que** le matériau apte à être projeté par un procédé de projection thermique est un matériau céramique ou un matériau métallique.

13. Procédé selon la revendication 12, **caractérisé en ce que** la base dure (3) est une base dure en matériau métallique obtenue par projection thermique dudit matériau sous forme de gouttelettes en fusion.

14. Procédé selon la revendication 13, **caractérisé en ce que** les gouttelettes en fusion proviennent d'un fil métallique chauffé à la flamme ou par un arc électrique.

15. Procédé selon la revendication 12, **caractérisé en ce que** la base dure (3) est une base dure (3) en matériau métallique obtenue par projection thermique dudit matériau sous forme d'une poudre métallique chauffée à la flamme ou une base dure en matériau métallique obtenue par projection thermique dudit matériau sous forme d'un jet de plasma.

16. Procédé selon l'une quelconque des revendications 12 à 15, **caractérisé en ce que** le matériau métallique est un acier, de préférence inoxydable.

17. Procédé selon la revendication 12, **caractérisé en ce que** la base dure (3) est une base dure en matériau céramique, de préférence en alumine, qui est obtenue par projection thermique dudit matériau sous forme d'une poudre chauffée à la flamme ou avec une torche plasma.

18. Procédé selon l'une quelconque des revendications 12 à 17, **caractérisé en ce que** l'étape d1) de préparation de la composition sol-gel (A+B) comprend :
▪ i) la préparation d'une composition aqueuse A comprenant 5 à 30% en poids par rapport au poids total de la composition aqueuse A d'au moins un oxyde métallique, et 0 à 20% en poids par rapport au poids de la composition A d'un solvant comprenant au moins un alcool, ladite composition A pouvant en outre comprendre de manière optionnelle au moins une huile de silicone ;
▪ ii) la préparation d'une solution B comprenant au moins un précurseur de type alcoxyde métallique ;
▪ iii) le mélange de la solution B d'alcoxyde métallique avec la composition aqueuse A pour obtenir une composition sol-gel (A+B) avec 40 à 75% en poids de composition aqueuse A par rapport au poids de la composition sol-gel (A+B), de manière que la quantité d'oxyde métallique colloïdal représente 5 à 30% poids de la composition sol-gel (A+B) à l'état sec.

19. Procédé selon la revendication 18, **caractérisé en ce que** l'oxyde métallique est un oxyde métallique colloïdal choisi dans le groupe constitué de la silice, l'alumine, l'oxyde de cérium, l'oxyde de zinc, l'oxyde de vanadium et l'oxyde de zirconium.

20. Procédé selon la revendication 18 ou 19, **caractérisé en ce que** le précurseur de type alcoxyde métallique de la solution B est choisi dans le groupe constitué par :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂,
avec :
R₁, R₂, R₃ ou R₃' désignant un groupement alkyle,
R₂' désignant un groupement alkyle, phényle,
n étant un nombre entier correspondant à la valence maximale des métaux M₁, M₂ ou M₃
M₁ M₂ et M₃ désignant Si.

21. Procédé selon la revendication 20, **caractérisé en ce que** l'alcoxyde métallique est un alcoxysilane, de préférence choisi parmi le méthyltriéthoxysilane (MTES) et le tétraéthoxysilane (TEOS).

## Patentansprüche

1. Kochartikel (1), umfassend einen Metallträger (2), der eine konkave Innenseite (21), die dazu vorgesehen ist, auf der Seite der Nahrungsmittel angeordnet zu werden, die imstande sind, in den Artikel eingeführt zu werden, und eine konvexe Außenseite (22) aufweist, die dazu vorgesehen ist, zu der Wärmequelle hin angeordnet zu werden, wobei die Innenseite (21) ausgehend von dem Träger (2) mit einer harten Basis (3) und einer die feste Basis (3) bedeckenden Antihaftbeschichtung (4) aufeinanderfolgend beschichtet ist,
**dadurch gekennzeichnet, dass**:
▪ die harte Basis (3) eine diskontinuierliche Schicht aus keramischem oder metallischem Material, die in Form einer Oberflächendispersion von Tropfen des Materials vorliegt, die auf der Innenseite (21) des Artikels (1) homogen verteilt sind, mit einem Abdeckungsanteil der Innenseite (21) zwischen 20 % und 90 % ist, und
▪ die Antihaftbeschichtung (4) eine Beschichtung vom glasartigen Typ, die in Form eines kontinuierlichen Film auftritt, der eine Dicke von mindestens 10 µm hat, ist und aus einem Sol-Gel-Material besteht, das eine Matrix aus mindestens einem Metallpolyalkoxylat und mindestens 5 Gew.-% von mindestens einem in der Matrix dispergierten Metalloxid bezogen auf das Gesamtgewicht der Beschichtung umfasst.

2. Kochartikel (1) nach Anspruch 1, **dadurch gekennzeichnet, dass** die harte Basis (3) eine diskontinuierliche Schicht aus rostfreiem Stahl ist.

3. Kochartikel (1) nach Anspruch 1, **dadurch gekennzeichnet, dass** die harte Basis (3) eine diskontinuierliche Schicht aus Aluminiumoxid oder Zirkoniumoxid ist.

4. Kochartikel (1) nach einem der Ansprüche 1 bis 3, **dadurch gekennzeichnet, dass** die Innenseite (21) des Trägers (2) sandgestrahlt oder gebürstet ist.

5. Kochartikel (1) nach einem der vorhergehenden Ansprüche, **dadurch gekennzeichnet, dass** die diskontinuierliche harte Basis (3) aus einem keramischen oder
metallischen Material hergestellt ist, das eine Härte aufweist, die gleich oder größer als diejenige des Metalls oder der Metalllegierung ist, aus der der Träger (2) besteht.

6. Kochartikel (1) nach einem der vorhergehenden Ansprüche, **dadurch gekennzeichnet, dass** das Metallpolyalkoxylat ein Polyalkoxysilan ist.

7. Kochartikel (1) nach einem der Ansprüche 1 bis 5, **dadurch gekennzeichnet, dass** das Metallpolyalkoxylat ein Aluminat ist.

8. Kochartikel (1) nach einem der Ansprüche 1 bis 5, **dadurch gekennzeichnet, dass** das Sol-Gel-Material eine gemischte Matrix aus Polyalkoxysilan und Aluminat umfasst.

9. Kochartikel (1) nach einem der vorhergehenden Ansprüche, **dadurch gekennzeichnet, dass** das Metalloxid aus der Gruppe ausgewählt ist, die aus Siliciumdioxid, Aluminiumoxid, Ceroxid, Zinkoxid, Vanadiumoxid und Zirkoniumoxid besteht.

10. Artikel (1) nach einem der vorhergehenden Ansprüche, **dadurch gekennzeichnet, dass** das Sol-Gel-Material, aus dem die Antihaftbeschichtung (2) besteht, ferner mindestens ein Silikonöl umfasst, das vorzugsweise aus Methylphenylsiliconen und Methylsiliconen ausgewählt ist.

11. Verfahren zur Herstellung eines Kochartikels (1), **dadurch gekennzeichnet, dass** es die folgenden Schritte umfasst:
a) einen Schritt zur Bereitstellung eines Trägers (2), der die endgültige Form des Kochartikels mit einer konkaven Innenseite (21), die dazu vorgesehen ist, um auf der Seite der Lebensmittel angeordnet zu werden, die dazu imstande sind, in den Artikel (1) eingeführt zu werden, und mit einer konvexen Außenfläche (22) aufweist, die dazu vorgesehen ist, auf der Seite einer Wärmequelle angeordnet zu werden;
b) optional einen Schritt zur Behandlung der Innenseite (21) des Trägers (3), um eine behandelte Innenseite (21) zu erhalten, die an das Anhaften einer harten Basis (3) an dem Träger (2) angepasst ist; wobei der Schritt b) zur Behandlung vorzugsweise ein Schritt zur mechanischen Behandlung vom Typ Sandstrahlen ist;
c) einen Schritt zur Herstellung einer harten Basis (3), die an der Innenseite (21) des Trägers (2), die zuvor behandelt wurde oder nicht, anhaftet;
d) einen Schritt zur Herstellung einer Antihaftbeschichtung (4) auf der in Schritt c) gebildeten harten Basis (3);
wobei das Verfahren **dadurch gekennzeichnet ist, dass** der Schritt c) zur Herstellung der harten Basis (3) das thermische Spritzen eines Materials, das geeignet ist, durch ein thermisches Spritzverfahren gespritzt zu werden, so dass auf der Innenseite (21) des Trägers (2) eine oberflächliche Dispersion von Tropfen des Materials gebildet wird, die an dem Träger (2) haften, auf der behandelten oder nicht behandelten Innenseite (21) des Trägers (2) umfasst, und
dass der Schritt d) zur Herstellung der Antihaftbeschichtung (4) auf der harten Basis (3) die folgenden aufeinanderfolgenden Schritte umfasst:
▪ d1) Zubereiten einer Sol-Gel-Zusammensetzung (A + B), die mindestens ein kolloidales Metalloxid und mindestens einen Vorläufer vom Typ Metalloxid umfasst;
▪ d2) Aufbringen von mindestens einer Schicht der Sol-Gel-Zusammensetzung (A + B), die eine Dicke von mindestens 20 µm im nassen Zustand hat, auf die gesamte oder einen Teil der harten Basisschicht (3); dann
▪ d3) Brennen der Schicht aus der Sol-Gel-Zusammensetzung (A + B), um eine nichtklebende glasartige Beschichtung (4) mit einer Dicke von mindestens 10 µm zu erhalten.

12. Verfahren nach Anspruch 11, **dadurch gekennzeichnet, dass** das Material, das zum Spritzen durch ein thermisches Spritzverfahren geeignet ist, ein keramisches Material oder ein metallisches Material ist.

13. Verfahren nach Anspruch 12, **dadurch gekennzeichnet, dass** die harte Basis (3) eine harte Basis aus metallischem Material ist, das durch thermisches Spritzen des Materials in Form von geschmolzenen Tröpfchen erhalten wird.

14. Verfahren nach Anspruch 13, **dadurch gekennzeichnet, dass** die geschmolzenen Tröpfchen von eineam flammenbeheizten Draht oder einem elektrischen Lichtbogen stammen.

15. Verfahren nach Anspruch 12, **dadurch gekennzeichnet, dass** die harte Basis (3) eine harte Basis aus metallischem Material, das durch thermisches Spritzen des Materials in Form eines Metallpulvers erhalten wird, das mit einer Flamme erhitzt wird, oder eine harte Basis aus einem metallischen Material ist, die durch thermisches Spritzen des Materials in Form von einem Plasmastrahl erhalten wird.

16. Verfahren nach einem der Ansprüche 12 bis 15, **dadurch gekennzeichnet, dass** das metallische Material ein Stahl, vorzugsweise ein rostfreier Stahl, ist.

17. Verfahren nach Anspruch 12, **dadurch gekennzeichnet, dass** die harte Basis (3) eine harte Basis aus Keramikmaterial, vorzugsweise aus Aluminiumoxid ist, die durch thermisches Spritzen des Materials in Form eines mit einer Flamme oder mit einem Plasmabrenner erhitzten Pulvers erhalten wird.

18. Verfahren nach einem der Ansprüche 12 bis 17, **dadurch gekennzeichnet, dass** der Schritt d1) zur Herstellung der Sol-Gel-Zusammensetzung (A + B) umfasst:
▪ i) die Herstellung einer wässrigen Zusammensetzung A, die 5 bis 30 Gew.-%, bezogen auf das Gesamtgewicht der wässrigen Zusammensetzung A von mindestens einem Metalloxid und 0 bis 20 Gew.-% bezogen auf das Gewicht der Zusammensetzung A eines Lösungsmittels umfasst, das mindestens einen Alkohol umfasst, wobei die Zusammensetzung A ferner optional mindestens ein Silikonöl umfassen kann;
▪ ii) die Herstellung einer Lösung B, die mindestens einen Vorläufer vom Typ Metallalkoxid umfasst;
▪ iii) das Mischen der Lösung B von Metallalkoxid mit der wässerigen Zusammensetzung A, um eine Sol-Gel-Zusammensetzung (A + B) mit 40 bis 75 Gew.-% der wässerigen Zusammensetzung A bezogen auf das Gewicht der Sol-Gel-Zusammensetzung (A + B) zu erhalten, so dass die Menge an kolloidalem Metalloxid 5 bis 30 Gew.-% der Sol-Gel-Zusammensetzung (A + B) im trockenen Zustand beträgt.

19. Verfahren nach Anspruch 18, **dadurch gekennzeichnet, dass** das Metalloxid ein kolloidales Metalloxid ist, das aus der Gruppe ausgewählt ist, die aus Siliciumdioxid, Aluminiumoxid, Ceroxid, Zinkoxid, Vanadiumoxid und Zirkoniumoxid besteht.

20. Verfahren nach Anspruch 18 oder 19, **dadurch gekennzeichnet, dass** der Vorläufer vom Typ Metallalkoxid der Lösung B aus der Gruppe ausgewählt ist, die besteht aus:
- den Vorläufern gemäß der allgemeinen Formel M₁(OR₁)ₙ,
- den Vorläufern gemäß der allgemeinen Formel M₂(OR₂)₍ₙ₋₁₎R₂' und
- den Vorläufern gemäß der allgemeinen Formel M₃(OR₃)₍ₙ-₂₎R₃'₂
wobei:
R₁, R₂, R₃ oder R₃' eine Alkylgruppe bezeichnet,
R₂' eine Alkyl-, Phenylgruppe bezeichnet,
n eine ganze Zahl ist, die der maximalen Wertigkeit der Metalle M₁, M₂ oder M₃ entspricht,
M₁, M₂ und M₃ Si bezeichnen.

21. Verfahren nach Anspruch 20, **dadurch gekennzeichnet, dass** das Metallalkoxid ein Alkoxysilan ist, das vorzugsweise aus Methyltriethoxysilan (MTES) und Tetraethoxysilan (TEOS) ausgewählt ist.

## Claims

1. Cooking utensil (1) comprising a metal support (2) having an inner concave face (21) intended to be arranged on the side of the food likely to be inserted into said utensil and an outer convex face (22) intended to be arranged towards the heat source, said inner face (21) being coated successively from the support (2) of a hard base (3) and a non-stick coating (4) covering said hard base (3), **characterised in that**:
• the hard base (3) is a discontinuous layer made of ceramic or metal material, which is presented in the form of a superficial dispersion of drops of said material distributed homogeneously over the inner face (21) of said utensil (1), with a coverage rate of the inner face (21) of between 20 % and 90 %, and
• said non-stick coating (4) is a vitreous-type coating, being presented in the form of a continuous film having a thickness of at least 10 µm and constituted of a sol-gel material comprising a matrix of at least one metal polyalkoxylate and at least 5 % by weight with respect to the total weight of the coating of at least one metal oxide dispersed in said matrix.

2. Cooking utensil (1) according to claim 1, **characterised in that** the hard base (3) is a discontinuous layer of stainless steel.

3. Cooking utensil (1) according to claim 1, **characterised in that** the hard base (3) is a discontinuous layer of alumina or zirconia.

4. Cooking utensil (1) according to any one of claims 1 to 3, **characterised in that** the inner face (21) of the support (2) is sandblasted or brushed.

5. Cooking utensil (1) according to any one of the preceding claims, **characterised in that** the discontinuous hard base (3) is made of a ceramic or metal material which has a hardness equal to or greater than the metal or metal alloy constituting the support (2).

6. Cooking utensil (1) according to any one of the preceding claims, **characterised in that** the metal polyalkoxylate is a polyalkoxysilane.

7. Cooking utensil (1) according to any one of claims 1 to 5, **characterised in that** the metal polyalkoxylate is an aluminate.

8. Cooking utensil (1) according to any one of claims 1 to 5, **characterised in that** the sol-gel material comprises a mixed polyalkoxysilane and aluminate matrix.

9. Cooking utensil (1) according to any one of the preceding claims, **characterised in that** the metal oxide is selected from the group constituted of silica, alumina, cerium oxide, zinc oxide, vanadium oxide and zirconium oxide.

10. Utensil (1) according to any one of the preceding claims, **characterised in that** the sol-gel material constituting said non-stick coating (2) further comprises at least one silicone oil, which is preferably selected from among methyl-phenyl silicones and methyl silicones.

11. Method for producing a cooking utensil (1), **characterised in that** it comprises the following steps:
a) a step of providing a support (2) having the final form of the cooking utensil with an inner concave face (21) intended to be arranged on the side of the food likely to be inserted in said utensil (1), and an outer convex face (22) intended to be arranged on the side of a heat source;
b) optionally, a step of treating the inner face (21) of the support (3) to obtain an inner treated face (21) adapted to the adherence of a hard base (3) on the support (2); said treatment step b) being preferably a step of sandblasting type mechanical treatment;
c) a step of producing an adherent hard base (3) on said inner face (21) of the support (2), treated beforehand or not;
d) a step of producing a non-stick coating (4) on said hard base (3) formed in step c);
said method being **characterised in that** the step c) of producing the hard base (3) comprises the thermal spraying on the inner face (21) of the support (2), treated or not, of a material capable of forming on said inner face (21) of the support (2), a superficial dispersion of drops of said material which adhere to the support (2), and
**in that** the step d) of producing the non-stick coating (4) on said hard base (3) comprises the following successive steps:
• d1) preparing a sol-gel composition (A + B) comprising at least one colloidal metal oxide and at least one metal oxide type precursor;
• d2) applying over all or some of said hard base layer (3) at least one layer of the sol-gel composition (A + B) having a thickness of at least 20 µm in a wet state;
• d3) curing said layer of sol-gel composition (A + B) to obtain a non-stick vitreous coating (4) of at least 10 µm of thickness.

12. Method according to claim 11, **characterised in that** the material capable of being sprayed by a thermal spraying method is a ceramic material or a metal material.

13. Method according to claim 12, **characterised in that** the hard base (3) is a hard base made of metal material obtained by thermal spraying of said material in the form of molten droplets.

14. Method according to claim 13, **characterised in that** the molten droplets come from a metal wire heated by a flame or by an electric arc.

15. Method according to claim 12, **characterised in that** the hard base (3) is a hard base (3) made of metal material obtained by thermal spraying of said material in the form of a metal powder heated by a flame or a hard base made of metal material obtained by thermal spraying of said material in the form of a plasma jet.

16. Method according to any one of claims 12 to 15, **characterised in that** the metal material is a steel, preferably stainless.

17. Method according to claim 12, **characterised in that** the hard base (3) is a hard base made of ceramic material, preferably alumina, which is obtained by thermal spraying of said material in the form of a powder heated by a flame or with a plasma torch.

18. Method according to any one of claims 12 to 17, **characterised in that** step d1) of preparing the sol-gel composition (A + B) comprises:
• i) preparing an aqueous composition A comprising 5 to 30 % by weight with respect to the total weight of the aqueous composition A of at least one metal oxide, and 0 to 20 % by weight with respect to the weight of the composition A of a solvent comprising at least one alcohol, said composition A further optionally comprising at least one silicone oil;
• ii) preparing a solution B comprising at least one metal alkoxide type precursor;
• iii) the mixture of the metal alkoxide solution B with the aqueous composition A to obtain a sol-gel composition (A + B) with 40 to 75 % by weight of aqueous composition A with respect to the weight of the sol-gel composition (A + B), such that the colloidal metal oxide quantity represents 5 to 30 % by weight of the sol-gel composition (A + B) in the dry state.

19. Method according to claim 18, **characterised in that** the metal oxide is a colloidal metal oxide selected from the group constituted of silica, alumina, cerium oxide, zinc oxide, vanadium oxide and zirconium oxide.

20. Method according to claim 18 or 19, **characterised in that** the metal alkoxide type precursor of the solution B is selected from the group constituted by:
- precursors of general formula M₁(OR₁)ₙ,
- precursors of general formula M₂(OR₂)₍ₙ₋₁₎R₂', and
- precursors of general formula M₃(OR₃)₍ₙ₋₂₎R₃'₂,
with:
R₁, R₂, R₃ or R₃' being an alkyl group,
R₂' being an alkyl, phenyl group,
n being a whole number corresponding to the maximum valency of the metals M₁, M₂ or M₃,
M₁, M₂ and M₃ being Si.

21. Method according to claim 20, **characterised in that** the metal alkoxide is an alkoxysilane, preferably selected from among methyltriethoxysilane (MTES) and tetraethoxysilane (TEOS).
